# FASCICULE DE BREVET EUROPEEN

(11) **EP 2 836 471 B1**
(45) Date de publication et mention de la délivrance du brevet: **22.05.2019**
(21) Numéro de dépôt: 13720471.5
(22) Date de dépôt: 11.04.2013
(51) Int. Cl.: C03C 17/00, C03C 17/28, C03C 17/32

(54) **TRAITEMENT DE SURFACE A FROID D'ORIGINE NATURELLE POUR ARTICLES EN VERRE CREUX**
KALTE NATÜRLICHEN OBERFLÄCHENBEHANDLUNG FÜR HOHLER GLASTEILE
NATURAL COLD SURFACE TREATMENT FOR HOLLOW GLASS ITEMS

(30) Priorité: 11.04.2012 FR 1253305
(43) Date de publication de la demande: 18.02.2015
(73) Titulaire: Verallia France, 92400 Courbevoie (FR)
(72) Inventeur: LAVALLEY-MAILLET, Perrine, 71390 Marcilly Les Buxy (FR); DESCORPS-DECLERE, Aurélie, 94140 Alfortville (FR); OBERT, Edouard, 60700 Fleurines (FR); DA SILVA, Claude, 93600 Aulnay Sous Bois (FR)
(74) Mandataire: Agasse, Stéphane
(86) Numéro de dépôt international: PCT/FR2013/050782
(87) Numéro de publication internationale: WO 2013/153332

(56) Documents cités:
- SU-A1- 1 315 406
- SU-A1- 1 627 529
- US-A- 3 445 275
- US-A- 3 525 636
- US-A- 3 997 693
- US-A1- 2005 003 973

## Description

La présente invention est relative à la fabrication d'articles en verre creux tels que bouteilles, flacons, pots, et en particulier à leur traitement de surface à froid, souvent appelé traitement bout froid.

Ces articles sont fabriqués de manière connue à partir de paraisons de verre fondu mises en forme dans des moules selon différents procédés de soufflage et/ou pressage. Une ébauche peut être formée dans un moule ébaucheur, puis transférée dans un moule finisseur. Les moules peuvent être installés sur une machine I.S. (Individual Section).

En sortie du moule finisseur, les articles à une température relativement élevée de 530°C à 550°C sont soumis à un traitement souvent appelé traitement bout chaud, par exemple par dépôt chimique en phase vapeur (CVD pour Chemical Vapor Déposition) de tétrachlorure d'étain SnCl₄. Ce traitement bout chaud a pour objet de conférer une première protection contre la rayure (contact avec la roue de transfert et/ou le stacker) ainsi que de servir d'accroche au traitement bout froid.

Les articles peuvent être ensuite transférés dans une arche de recuisson où ils sont rechauffés puis refroidis à vitesse contrôlée de 550°C à 150°C afin de libérer les contraintes dans le verre. En sortie de l'arche de recuisson les articles refroidis à une température de 110°C à 150°C peuvent être alors soumis à un traitement « bout froid », à nouveau par pulvérisation d'une composition. Le traitement bout froid peut avoir plusieurs objets. Il vise notamment à augmenter la résistance des articles aux rayures, c'est-à-dire à éviter que des rayures se forment, ou retarder leur formation quand les articles s'entrechoquent au cours du convoyage, en aval de l'arche de recuisson. Une autre fonction du traitement bout froid est de faciliter le glissement des articles les uns sur les autres, lorsqu'ils entrent en contact au cours du convoyage. Ce glissement facilité est corrélé à la diminution de la formation de rayures.

La présente invention a pour objectif la mise à disposition d'un traitement bout froid par une composition d'origine naturelle, permettant de limiter les sources de pollution aux niveaux de la synthèse des constituants de la composition de traitement, et du traitement bout froid lui-même, les excédents éventuellement rejetés de composition de traitement pouvant être exclusivement d'origine naturelle, et inoffensifs vis-à-vis de l'environnement.

Cet objectif a été atteint par l'invention qui, en conséquence, a pour objet une composition de traitement à froid d'articles en verre creux, caractérisée en ce qu'elle est une solution aqueuse contenant 0,01 à 1 % en masse de matière sèche de cire de Carnauba, et 0,07 à 0,8 % en masse de matière sèche de gluten de blé.

La cire de Carnauba est dérivée des feuilles du Copernicia Prunifera, a le N° CAS 8015-86-9, a un point de fusion d'environ 90 °C, présente une certaine dureté à température ambiante, et une compatibilité avec le contact alimentaire direct. Cette dernière propriété est requise quand l'article est destiné à contenir un produit alimentaire et quand le traitement à froid est effectué par pulvérisation aérienne (c'est-à-dire par le dessus) n'excluant pas qu'une petite fraction de la composition de traitement ne pénètre à l'intérieur de l'article.

La cire de Carnauba confère à l'article des propriétés de glissement (notamment sur un autre article) et accroit sa résistance à la rayure, comme vu plus en détails dans la suite.

Le gluten de blé est soluble dans l'eau, a une capacité d'absorption de l'eau et confère à l'article la compatibilité avec toutes les colles aqueuses utilisées pour le collage d'étiquettes, même aux endroits de la surface de l'article où l'épaisseur du revêtement de traitement à froid est plus forte (épaule de bouteille par exemple)

Selon des caractéristiques préférées:
- la composition contient au moins 0,04, de préférence 0,07 % en masse de matière sèche de cire de Carnauba ;
- la composition contient au plus 0,4, de préférence 0,2 % en masse de matière sèche de cire de Carnauba ;
- la composition contient au moins 0,1, de préférence 0,15 % en masse de matière sèche de gluten de blé ;
- la composition contient au plus 0,6, de préférence 0,4 % en masse de matière sèche de gluten de blé ;
- la composition contient au moins 0,1 % en masse de matière sèche de résine de colophane ; celle-ci, de N° CAS 8050-09-7, a des propriétés collantes et une dureté élevée ; elle permet ici d'augmenter considérablement la résistance à la rayure sans affecter les propriétés de glissement ; la teneur maximale en résine de colophane n'est pas limitée, mais pour des questions de coût, elle peut ne pas excéder, par ordre de préférence croissant 5, 3, 2, 1,5, 1, et 0,8 % en masse de matière sèche ;
- la composition contient au moins 0,2 % en masse de matière sèche de résine de colophane ;
- la composition contient au plus 0,6 % en masse de matière sèche de résine de colophane.

L'invention a également pour objets :
- un procédé de traitement à froid d'articles en verre creux, comprenant la pulvérisation d'une composition décrite précédemment ; et
- un article en verre creux obtenu par ce procédé ; il s'agit notamment d'un article dont la surface comporte, sur une épaisseur variable, par exemple de 1 nm à 1 µm, de la cire de Carnauba.

L'invention est maintenant illustrée par les exemples suivants.

### Exemple 1

Dans cet exemple sont traitées des bouteilles de 75 cl, 300 g, type Bourgogne, issues d'une même production (même composition, même machine I.S., production simultanée).

On évalue les propriétés de glissement des bouteilles les unes par rapport aux autres. Pour ce faire, on contraint deux bouteilles en contact direct flanc contre flanc sur un plan inclinable, on place une troisième bouteille sur les deux premières, et l'on mesure à partir de quel angle d'inclinaison du plan la troisième bouteille commence à glisser.

En l'absence de tout traitement à froid, cet angle est d'environ 25°.

Quelle que soit la composition de traitement à froid, on peut régler les paramètres du procédé de traitement de manière à obtenir un angle de glissement voulu : ces paramètres sont par exemple le débit et la durée de pulvérisation.

Dans cet exemple, on met exclusivement en oeuvre une pulvérisation aérienne (par le dessus), dont les paramètres sont réglés pour obtenir, chaque fois, un angle de glissement de 10°.

La résistance à la rayure des bouteilles est évaluée selon le protocole suivant. Deux bouteilles sont maintenues l'une au-dessus de l'autre, leurs axes longitudinaux en position perpendiculaire l'un par rapport à l'autre, avec une force de 30 kg. La bouteille supérieure est fixe, la bouteille inférieure mobile en translation de va et vient selon la bissectrice de la projection des axes longitudinaux des deux bouteilles, une fréquence de 2 Hz et une amplitude de 16 mm.

Dans les exemples de cette demande, toutes les compositions de traitement à froid sont exclusivement aqueuses.

Dans un premier essai, on traite à froid une bouteille avec une composition de cire de polyéthylène à 0,2 % d'extrait sec. On observe 175 cycles avant rayure.

Dans un second essai, on traite à froid une bouteille avec une composition de cire de Carnauba à 0,14 % d'extrait sec. On observe 148 cycles avant rayure.

Cependant, le collage d'étiquettes est problématique : on observe 100 % de décollement facile de l'étiquette 24 h après collage, quelque soit la colle utilisée.

### Exemple 2

Par le traitement à froid, on obtient un angle de glissement de 10°.

Dans un troisième essai, on reproduit le second en adjoignant, dans la composition de traitement, une quantité de gluten de blé égale à celle de cire de Carnauba : le collage de l'étiquette est bon avec la caséine, mauvais avec l'amidon.

Dans un quatrième essai, on reproduit le second en adjoignant, dans la composition de traitement, une quantité de gluten de blé double de celle de cire de Carnauba : le collage est excellent avec la caséine et l'amidon, l'étiquette se déchirant sans se décoller 24 h après collage.

Le gluten de blé est donc un bon agent auxiliaire d'amélioration du collage des étiquettes.

### Exemple 3

Par le traitement à froid, on obtient un angle de glissement de 10°.

Est ici traité un lot de bouteilles similaires à celles précédemment décrites, mais qui en diffèrent néanmoins par plusieurs aspects de leur procédé de fabrication.

On reproduit le premier essai constituant le cinquième essai : la résistance moyenne à la rayure est de 10 cycles.

On reproduit le troisième essai constituant le sixième essai : la résistance moyenne à la rayure est de 19 cycles.

Dans un septième essai, on reproduit le sixième en adjoignant, dans la composition de traitement, une quantité de résine de colophane triple de celle de cire de Carnauba d'une part, de gluten de blé d'autre part : la résistance moyenne à la rayure est de 159 cycles.

On établit ainsi l'efficacité de la résine de colophane comme agent auxiliaire d'augmentation de la résistance à la rayure.

Cet exemple montre également que l'évaluation de la résistance à la rayure est relative à une production donnée de bouteilles. Ainsi les valeurs obtenues aux premier et troisième, respectivement cinquième et sixième essais sont très différentes. Entre les deux lots de bouteilles, les traitements bout chaud, notamment, ont différé.

### Exemple 4

Sur un autre lot de bouteilles du même type que cité précédemment, on effectue des traitements à froid de manière à obtenir, cette fois, un angle de glissement de 15°.

Les compositions ci-dessous sont exprimées en masse d'extrait sec dans l'eau.

Dans le huitième essai, la composition de traitement contient 0,14 % de cire de Carnauba et 0,33 % de résine de colophane.

Les neuvième, dixième et onzième essais sont obtenus en adjoignant, à cette composition du huitième essai, 0,14, respectivement 0,22, respectivement 0,29 % de gluten de blé.

Les performances sont consignées dans le tableau ci-dessous.

| Essai | Nombre de cycles avant rayure | Collage aqueux (amidon) | Collage aqueux (caséine) |
|---|---|---|---|
| huitième | 144 | mauvais | moyen |
| neuvième | 187 | mauvais | bon |
| dixième | 170 | moyen | bon |
| onzième | 221 | bon | bon |

| | | | |
|---|---|---|---|
| Collage mauvais : 100 % de l'étiquette se décolle 24 h après le collage. Collage moyen : une partie de l'étiquette se décolle. Collage bon : l'étiquette ne peut pas être décollée, elle se déchire. | | | |

Les valeurs obtenues dans ce tableau corroborent en tous points les constatations des exemples précédents.

Le document US 3 525 636 A décrit une composition sur base aqueuse pour la protection de la surface d'articles en verre creux, qui comprend 0,105 à 0,3 % en masse de cire de Carnauba.

Les documents US 3 997 693 A et US 3 445 275 A décrivent d'autres compositions de cire de Carnauba utilisées dans le même but.

## Revendications

1. Composition de traitement à froid d'articles en verre creux, **caractérisée en ce qu'**elle est une solution aqueuse contenant 0,01 à 1 % en masse de matière sèche de cire de Carnauba, et 0,07 à 0,8 % en masse de matière sèche de gluten de blé.

2. Composition selon la revendication 1, **caractérisée en ce qu'**elle contient au moins 0,04 % en masse de matière sèche de cire de Carnauba.

3. Composition selon l'une des revendications précédentes, **caractérisée en ce qu'**elle contient au plus 0,4 % en masse de matière sèche de cire de Carnauba.

4. Composition selon l'une des revendications précédentes, **caractérisée en ce qu'**elle contient au moins 0,07 % en masse de matière sèche de cire de Carnauba.

5. Composition selon l'une des revendications précédentes, **caractérisée en ce qu'**elle contient au plus 0,2 % en masse de matière sèche de cire de Carnauba.

6. Composition selon l'une des revendications précédentes, **caractérisée en ce qu'**elle contient au moins 0,1 % en masse de matière sèche de gluten de blé.

7. Composition selon l'une des revendications précédentes, **caractérisée en ce qu'**elle contient au plus 0,6 % en masse de matière sèche de gluten de blé.

8. Composition selon l'une des revendications précédentes, **caractérisée en ce qu'**elle contient au moins 0,15 % en masse de matière sèche de gluten de blé.

9. Composition selon l'une des revendications précédentes, **caractérisée en ce qu'**elle contient au plus 0,4 % en masse de matière sèche de gluten de blé.

10. Composition selon l'une des revendications précédentes, **caractérisée en ce qu'**elle contient au moins 0,1 % en masse de matière sèche de résine de colophane.

11. Composition selon l'une des revendications précédentes, **caractérisée en ce qu'**elle contient au moins 0,2 % en masse de matière sèche de résine de colophane.

12. Composition selon l'une des revendications précédentes, **caractérisée en ce qu'**elle contient au plus 0,6 % en masse de matière sèche de résine de colophane.

13. Procédé de traitement à froid d'articles en verre creux, comprenant la pulvérisation d'une composition selon l'une des revendications précédentes.

14. Article en verre creux obtenu par un procédé selon la revendication 13.

## Patentansprüche

1. Zusammensetzung für die kalte Behandlung von Artikeln aus hohlem Glas, **dadurch gekennzeichnet, dass** sie eine wässrige Lösung ist, enthaltend 0,01 bis 1 Ma% Trockenmasse Carnaubawachs und 0,07 bis 0,8 Ma% Trockenmasse Weizengluten.

2. Zusammensetzung nach Anspruch 1, **dadurch gekennzeichnet, dass** sie mindestens 0,04 Ma% Trockenmasse Carnaubawachs enthält.

3. Zusammensetzung nach einem der vorangehenden Ansprüche, **dadurch gekennzeichnet, dass** sie höchstens 0,4 Ma% Trockenmasse Carnaubawachs enthält.

4. Zusammensetzung nach einem der vorangehenden Ansprüche, **dadurch gekennzeichnet, dass** sie mindestens 0,07 Ma% Trockenmasse Carnaubawachs enthält.

5. Zusammensetzung nach einem der vorangehenden Ansprüche, **dadurch gekennzeichnet, dass** sie höchstens 0,2 Ma% Trockenmasse Carnaubawachs enthält.

6. Zusammensetzung nach einem der vorangehenden Ansprüche, **dadurch gekennzeichnet, dass** sie mindestens 0,1 Ma% Trockenmasse Weizengluten enthält.

7. Zusammensetzung nach einem der vorangehenden Ansprüche, **dadurch gekennzeichnet, dass** sie höchstens 0,6 Ma% Trockenmasse Weizengluten enthält.

8. Zusammensetzung nach einem der vorangehenden Ansprüche, **dadurch gekennzeichnet, dass** sie mindestens 0,15 Ma% Trockenmasse Weizengluten enthält.

9. Zusammensetzung nach einem der vorangehenden Ansprüche, **dadurch gekennzeichnet, dass** sie höchstens 0,4 Ma% Trockenmasse Weizengluten enthält.

10. Zusammensetzung nach einem der vorangehenden Ansprüche, **dadurch gekennzeichnet, dass** sie mindestens 0,1 Ma% Trockenmasse Kolophoniumharz enthält.

11. Zusammensetzung nach einem der vorangehenden Ansprüche, **dadurch gekennzeichnet, dass** sie mindestens 0,2 Ma% Trockenmasse Kolophoniumharz enthält.

12. Zusammensetzung nach einem der vorangehenden Ansprüche, **dadurch gekennzeichnet, dass** sie höchstens 0,6 Ma% Trockenmasse Kolophoniumharz enthält.

13. Verfahren für die kalte Behandlung von Artikeln aus hohlem Glas, umfassend das Zerstäuben einer Zusammensetzung nach einem der vorangehenden Ansprüche.

14. Artikel aus hohlem Glas, erhalten durch ein Verfahren nach Anspruch 13.

## Claims

1. A composition for cold treating hollow glass items, **characterized in that** it consists of an aqueous solution containing 0.01 to 1 % by weight of dry matter of Carnauba wax, and 0.07 to 0.8 % by weight of dry matter of wheat gluten.

2. The composition according to claim 1, **characterized in that** it contains at least 0.04 % by weight of dry matter of Carnauba wax.

3. The composition according to any of the preceding claims, **characterized in that** it contains at most 0.4 % by weight of dry matter of Carnauba wax.

4. The composition according to any of the preceding claims, **characterized in that** it contains at least 0.07 % by weight of dry matter of Carnauba wax.

5. The composition according to any of the preceding claims, **characterized in that** it contains at most 0.2 % by weight of dry matter of Carnauba wax.

6. The composition according to any of the preceding claims, **characterized in that** it contains at least 0.1 % by weight of dry matter of wheat gluten.

7. The composition according to any of the preceding claims, **characterized in that** it contains at most 0.6 % by weight of dry matter of wheat gluten.

8. The composition according to any of the preceding claims, **characterized in that** it contains at least 0.15 % by weight of dry matter of wheat gluten.

9. The composition according to any of the preceding claims, **characterized in that** it contains at most 0.4 % by weight of dry matter of wheat gluten.

10. The composition according to any of the preceding claims, **characterized in that** it contains at least 0.1 % by weight of dry matter of colophony resin.

11. The composition according to any of the preceding claims, **characterized in that** it contains at least 0.2 % by weight of dry matter of colophony resin.

12. The composition according to any of the preceding claims, **characterized in that** it contains at most 0.6 % by weight of dry matter of colophony resin.

13. A method for cold treating hollow glass items, comprising the spraying of a composition according to any of the preceding claims.

14. A hollow glass item obtained by a method according to claim 13.
